# EUROPÄISCHE PATENTANMELDUNG

(11) **EP 2 746 758 A1**
(43) Veröffentlichungstag der Anmeldung: **25.06.2014**
(21) Anmeldenummer: 13196607.9
(22) Anmeldetag: 19.12.2012
(51) Int. Cl.: G01N 27/22

(54) **Verfahren und Vorrichtung zur Bestimmung des Feuchtegehalts und zum Trocknen einer Isolierung**

(62) Teilanmeldung aus: 12008449.6
(71) Anmelder: Omicron electronics GmbH, 6833 Klaus (AT)
(72) Erfinder: Anglhuber, Martin, 6800 Feldkirch (AT); Rätzke, Stephanie, 6830 Rankweil (AT); Schmutzhard, Tobias, 6921 Kennelbach (AT); Klapper, Ulrich, 6830 Rankweil (AT)
(74) Vertreter: Banzer, Hans-Jörg

(57) **Zusammenfassung**

Die vorliegende Erfindung betrifft ein Verfahren und eine Vorrichtung um den Feuchtegehalt einer Isolierung (17, 18) eines elektrischen Betriebsmittels (1) zu bestimmen und um die Isolierung (17, 18) zu trocknen. Dabei wird eine dielektrische Antwort der Isolierung (17, 18) mittels einer Elektrode (13; 14) des Betriebsmittels (1) und einer Gegenelektrode (11) gemessen, um davon abhängig den Feuchtegehalt einer zwischen der Elektrode und der Gegenelektrode angeordneten Komponente (18) der Isolierung zu bestimmen. Die Gegenelektrode (11) ist durch einen Trocknungsraum gebildet, in dem das Betriebsmittel (1) getrocknet wird.

## Beschreibung

Die vorliegende Erfindung betrifft ein Verfahren und eine Vorrichtung, um zum einen einen Feuchtegehalt einer Komponente der Isolierung eines elektrischen Betriebsmittels (z. B. eines Transformators) zu messen und um zum anderen diese Isolierung zu trocknen.

Feuchtigkeit bzw. eingelagertes Wasser insbesondere bei Öl-Papier-Isolierungen beispielsweise von Leistungstransformatoren und Messwandlern verringert deren elektrische Festigkeit, beschleunigt ihre Alterung und kann zur Bildung von Gasblasen in der Isolierung führen, was wiederum die Lebensdauer deutlich verringert und zu vorzeitigen Ausfällen führen kann. Daher sollte die Feuchtigkeit während eines Herstellungsprozesses sowie nach jeder Reparatur- oder Instandhaltungsmaßnahme reduziert werden. Aus diesem Grund wird zum einen beim Herstellungsprozess nach einer Trocknung ein geringer Wassergehalt in der Feststoffisolierung angestrebt. Zum anderen wird bei Reparatur- und Instandhaltungsmaßnahmen rückgetrocknet, da hygroskopisch bedingt Wasser eindringen kann. Die Dauer eines solchen Trocknungsprozesses basiert nach dem Stand der Technik auf Erfahrungs- und Schätzwerten, da eine direkte Überwachung des Trocknungsfortschritts nicht möglich ist.

Besonders kritisch bei der Trocknung sind dabei dicke Papier- oder Pressboardelemente (z.B. Pressringe bei einem Transformator), welche üblicherweise verwendet werden, um die Isolierung (bei einem Transformator in der axialen Richtung) zu fixieren. Aufgrund ihrer Dicke benötigen diese Komponenten üblicherweise im Vergleich zu anderen Komponenten der Isolierung die längste Zeit zum Trocknen und bestimmen daher maßgeblich die Zeitdauer, während welcher die gesamte Isolierung getrocknet werden muss. Nachteiligerweise liegen diese Komponenten nur am Rand eines elektrischen Feldes, welches zur üblichen Feuchtebestimmung der Isolation zwischen Elektroden des Betriebsmittels erzeugt wird, so dass die Feuchte dieser Komponenten kaum Auswirkungen auf das Messergebnis der Feuchtebestimmung hat und damit häufig falsch bestimmt wird.

Daher stellt sich die vorliegende Erfindung die Aufgabe, die Messung eines Feuchtegehalts einer solchen Komponente der Isolierung eines elektrischen Betriebsmittels sowie das Trocknen der Isolierung mit einer solchen Komponente zu verbessern.

Erfindungsgemäß wird diese Aufgabe durch ein Verfahren zur Bestimmung des Feuchtegehalts einer Komponente einer Isolierung eines elektrischen Betriebsmittels nach Anspruch 1, durch ein Verfahren zum Trocknen einer Isolierung eines elektrischen Betriebsmittels nach Anspruch 4, durch eine Vorrichtung zur Bestimmung des Feuchtegehalts einer Komponente einer Isolierung eines elektrischen Betriebsmittels nach Anspruch 6 sowie durch eine Trocknungsvorrichtung zum Trocknen einer Isolierung eines elektrischen Betriebsmittels nach Anspruch 8 gelöst. Die abhängigen Ansprüche definieren bevorzugte und vorteilhafte Ausführungsformen der vorliegenden Erfindung.

Im Rahmen der vorliegenden Erfindung wird ein Verfahren zur Bestimmung des Feuchtegehalts einer Komponente einer Isolierung eines elektrischen Betriebsmittels bereitgestellt. Dabei umfasst das Verfahren folgende Schritte:
- Messen einer dielektrischen Antwort der Isolierung. In diesem Schritt werden dielektrische Eigenschaften der Isolierung bestimmt, aus welchen sich der durchschnittliche Feuchtegehalt der Isolierung ableiten lässt.
- Bestimmen eines Feuchtegehalts der Isolierung abhängig von der dielektrischen Antwort. In diesem Schritt wird ausgehend von der dielektrischen Antwort oder den dielektrischen Eigenschaften der Isolierung der durchschnittliche Feuchtegehalt der Isolierung abgeleitet.
- Bestimmen einer Information, welche einen Einfluss einer Geometrie der Isolierung auf die dielektrische Antwort anzeigt, ausgehend von der dielektrischen Antwort. Neben der Feuchte hat auch die Geometrie der Isolierung einen Einfluss auf die dielektrische Antwort. In diesem Schritt wird die Information über die Geometrie der Isolierung aus der dielektrischen Antwort abgeleitet.
- Bestimmen des Feuchtegehalts der Komponente der Isolierung abhängig von dem Feuchtegehalt der Isolierung und der Information.

Es sei darauf hingewiesen, dass sich das Betriebsmittel bei der Durchführung der vorliegenden Erfindung nicht in Betrieb befinden sollte. Mit anderen Worten sollte das Betriebsmittel vor der Durchführung der vorliegenden Erfindung offline geschaltet werden.

Das Messen der dielektrischen Antwort der Isolierung kann dabei für mehrere Frequenzen (z.B. von 0,1 mHz bis 100 Hz) durchgeführt werden, so dass das Messen der dielektrischen Antwort folgende Schritte umfassen kann:
- Anlegen einer Spannung mit verschiedenen Frequenzen an zwei Elektroden des Betriebsmittels.
- Messen eines von der Spannung eingeprägten Stroms durch die Isolierung in Betrag und Phase.
- Die dielektrischen Verluste des elektrischen Betriebsmittels werden abhängig von der angelegten Spannung und dem gemessenen Strom für die verschiedenen Frequenzen bestimmt.

Es sei weiter darauf hingewiesen, dass die Bestimmung der dielektrischen Antwort bei verschiedenen Frequenzen neben der oben beschriebenen Frequenzbereichsspektroskopie (FDS) bei der vorliegenden Erfindung auch durch eine Polarisations- und Depolarisationsstrommessung (PDC) oder durch eine Kombination von FDS und PDC erfolgen kann. Bei der PDC wird ein Spannungssprung angelegt und der daraus resultierende Stromverlauf beispielsweise mittels einer Fouriertransformation in den Frequenzbereich umgerechnet. Die FDS wird vorzugsweise bei hohen und die PDC bei tiefen Frequenzen eingesetzt.

Die dielektrischen Verluste können dabei beispielsweise durch Bestimmung des Verlustfaktors des Betriebsmittels oder durch Bestimmung der komplexen Permittivität des Betriebsmittels ermittelt werden.

Dadurch ist es beispielsweise möglich aus der Messung der dielektrischen Antwort einen Verlauf einer elektrischen Eigenschaft (beispielsweise des Verlustfaktors oder der Permittivität) des Betriebsmittels über der Frequenz zu bestimmen. Über diesen Verlauf der elektrischen Eigenschaft über der Frequenz kann dann der Feuchtegehalt der Isolierung sehr genau bestimmt werden.

Erfindungsgemäß können bereits vorhandene, leitfähige Komponenten des Prüflings bzw. Betriebsmittels zum Messen der dielektrischen Antwort verwendet werden.

Bei dem elektrischen Betriebsmittel kann es sich beispielsweise um
- einen Leistungstransformator oder Hochspannungstransformator,
- eine Spule (Induktivität),
- einen Wandler, z.B. Messwandler zur Messung einer Hochspannung (1000 V oder mehr),
- einen Kondensator, oder
- eine Durchführung, z.B. zum Durchleiten eines Starkstroms und zum Anlegen einer Hochspannung,
handeln.

Um aus der dielektrischen Antwort sowohl den Feuchtegehalt als auch die Geometrie der Isolierung abzuleiten, wird die gemessene dielektrische Antwort insbesondere mit Antworten in einer Datenbank verglichen, welche die dielektrische Antwort für verschiedene Kombinationen von Feuchte und Temperatur einer Zelluloseisolierung enthält. Durch eine Modellierung wird aus den Werten dieser Datenbank für eine bestimmte Isolationsgeometrie eine zugehörige dielektrische Antwort errechnet. Dabei wird bei den in der Datenbank enthaltenen Kombinationen eine homogene Feuchteverteilung der Isolierung angenommen. Bei einer nicht homogenen Feuchteverteilung ändert sich im Vergleich zu einer homogenen Feuchteverteilung die Information, welche den Einfluss der Geometrie der Isolierung auf die dielektrische Antwort anzeigt. Daher kann aus der Kombination der Information über den Feuchtegehalt und der Information über die Geometrie eine Information über den Feuchtegehalt einer bestimmten Komponente der Isolierung ermittelt werden.

Insbesondere wird die Messung der dielektrischen Antwort wiederholt (beispielsweise periodisch) durchgeführt. Wenn die Information, welche den Einfluss der Geometrie der Isolierung auf die dielektrische Antwort anzeigt, für aufeinanderfolgende Messungen einen im Wesentlichen gleich bleibenden Einfluss der Geometrie auf die dielektrische Antwort anzeigt, kann von einer homogenen Feuchteverteilung ausgegangen werden, so dass der aus der dielektrischen Antwort abgeleitete Feuchtegehalt auch dem Feuchtegehalt der Komponente entspricht. Dabei kann von einem im Wesentlichen gleichbleibenden Einfluss der Geometrie auf die dielektrische Antwort beispielsweise dann ausgegangen werden, wenn ein Betrag einer Änderung der den Einfluss der Geometrie beschreibenden Information für die aufeinanderfolgenden Messungen unter einem vorbestimmten Schwellenwert liegt.

Ein bevorzugter Anwendungsbereich für das erfindungsgemäße Verfahren zur Bestimmung des Feuchtegehalts einer Komponente ist die Trocknung des entsprechenden elektrischen Betriebsmittels.

Wenn der Einfluss der Geometrie der Isolierung auf die dielektrische Antwort bei einer homogenen Feuchteverteilung beispielsweise durch entsprechende Messungen oder durch die Kenntnis der Geometrie bekannt ist, kann ein vorbestimmter Wert der Information über den Einfluss der Geometrie der Isolierung dazu verwendet werden, um das Erreichen einer homogenen Feuchtigkeitsverteilung festzustellen. Wenn also die aus der dielektrischen Antwort abgeleitete Information, welche den Einfluss der Geometrie auf die dielektrische Antwort anzeigt, diesem vorgegebenen Wert entspricht, wird der Feuchtegehalt der Komponente gleich dem Feuchtegehalt der Isolierung bestimmt.

Mit der vorliegenden Erfindung kann insbesondere auch der Feuchtegehalt einer außen liegenden Komponente der Isolierung bestimmt werden. Dabei wird unter einer außen liegenden Komponente der Isolierung eine Komponente verstanden, welche beim Messen der dielektrischen Antwort außerhalb eines Zwischenraums liegt, welcher zwischen Elektroden angeordnet ist, welche von Messmitteln eingesetzt werden, mit welchen die dielektrische Antwort gemessen wird.

Wenn die erfindungsgemäße Feuchtebestimmung während der Trocknung Öl-Papier-isolierter Systeme bzw. Betriebsmittel eingesetzt wird, bleibt die tatsächliche Geometrie dieser Betriebsmittel während der Trocknung weit gehend konstant. Die Trocknung erfolgt jedoch nicht bei allen Komponenten der Isolierung gleichförmig, da insbesondere voluminöse Komponenten (z. B. die Presskonstruktion eines Transformators) langsamer trocknen als Komponenten mit weniger Volumen. Aufgrund der höheren Feuchte der voluminösen Komponenten weisen diese eine erhöhte Permittivität im Vergleich zu den trockneren Komponenten auf, wodurch sich auch deren Einfluss auf die dielektrische Antwort vergrößert. Dieser sich mit der Feuchteverteilung ändernde Einfluss auf die dielektrische Antwort führt erfindungsgemäß zu einer Änderung der Information, welche einen Einfluss der Geometrie der Isolierung auf die dielektrische Antwort anzeigt. Durch eine wiederholende (periodische) Messung der dielektrischen Antwort wird neben der Feuchte auch die die Geometrie betreffende Information laufend ermittelt. Daraus lässt sich demnach bestimmen, ob ein sich ändernde Einfluss der Geometrie vorliegt, was auf eine nicht homogene Feuchteverteilung und auf eine noch fortschreitende Trocknung einzelner Komponenten der Isolierung schließen lässt. Ein konstanter Einfluss der Geometrie bzw. konstante Geometriewerte lassen hingegen auf eine homogene Feuchteverteilung schließen, so dass die Trocknung beendet werden kann, falls der gewünschte Feuchtewert erreicht ist.

Im Rahmen der vorliegenden Erfindung wird auch ein weiteres Verfahren zur Bestimmung des Feuchtegehalts einer Komponente einer Isolierung eines elektrischen Betriebsmittels bereitgestellt. Dieses weitere Verfahren umfasst folgende Schritte:
- Messen der dielektrischen Antwort der Isolierung mit Hilfe einer Elektrode des Betriebsmittels und einer Gegenelektrode, welche nicht zu dem Betriebsmittel gehört. Die Komponente, deren Feuchtegehalt zu bestimmen ist, wird dabei zwischen der Elektrode des Betriebsmittels und der Gegenelektrode angeordnet.
- Bestimmen des Feuchtegehalts der Komponente in Abhängigkeit von der dielektrischen Antwort.

Durch den Einsatz und eine entsprechende Anordnung der Gegenelektrode liegt die Komponente, deren Feuchtegehalt zu bestimmen ist, vorteilhafterweise zwischen der Elektrode und der Gegenelektrode. Daher beeinflusst die Komponente das zwischen der Elektrode und der Gegenelektrode liegende elektrische Feld und damit die entsprechende dielektrische Antwort stärker, als wenn sich die Komponente nur im Randbereich des elektrischen Feldes befinden würde.

Bei der Gegenelektrode kann es sich zum einen um einen Trocknungsraum (Ofen) handeln, in welchem das elektrische Betriebsmittel (beispielsweise ein Transformator, eine Spule, ein Wandler, ein Kondensator oder eine Durchführung) und damit die Isolierung getrocknet wird. Auf der anderen Seite kann es sich, wenn es sich bei dem Betriebsmittel um einen Transformator oder um einen Wandler handelt, bei der Gegenelektrode um den Kern dieses Transformators oder Wandlers handeln.

In beiden Fällen (d.h. sowohl wenn die Gegenelektrode vom Trocknungsraum als auch wenn die Gegenelektrode vom Kern gebildet wird) befinden sich gerade außen liegende Komponenten der Isolierung im elektrischen Feld, welches zwischen der Elektrode des Betriebsmittels und der Gegenelektrode erzeugt wird. Da die dann gemessene die elektrische Antwort verhältnismäßig stark von dieser außen liegenden Komponente bestimmt wird, kann der Feuchtegehalt der Komponente direkt abhängig von der dielektrischen Antwort (d.h. z.B. ohne Bestimmung der den Einfluss der Geometrie der Isolierung anzeigenden Information) bestimmt werden.

Die Isolierung kann eine Papierisolierung umfassen, so dass die Isolierung beispielsweise aus Pressboard, Papier und eingefülltem Isolieröl bestehen kann.

Im Rahmen der vorliegenden Erfindung wird auch ein Verfahren zum Trocknen einer Isolierung eines elektrischen Betriebsmittels bereitgestellt. Dabei wird der Feuchtegehalt der Isolierung mit dem vorab beschriebenen erfindungsgemäßen Verfahren bestimmt. Das Trocknen der Isolierung wird dann abhängig von dem erfindungsgemäß bestimmten Feuchtegehalt durchgeführt.

Indem der Feuchtegehalt während des Trocknens erfindungsgemäß bestimmt wird, ist es möglich, die Isolierung genau so lange zu trocknen, bis ein gewünschter Feuchtewert bzw. Feuchtegehalt der Isolierung erreicht ist. Dadurch werden beispielsweise Schädigungen der Isolierung durch ein zu langes Trocknen vermieden. Darüber hinaus kann dadurch eine optimal kurze Trockenzeit erzielt werden, so dass im Vergleich zum Stand der Technik Kosten und Energie eingespart werden oder der Durchsatz eines Trocknungsofens gesteigert werden kann.

Das erfindungsgemäße Bestimmen des Feuchtegehalts während des Trocknens wird dabei vorteilhafterweise ohne eine Unterbrechung des Trockenvorgangs durchgeführt.

Beispielsweise kann erfindungsgemäß festgestellt werden, außen liegende Komponenten der Isolierung eine höhere Feuchte als die restliche Isolierung, welche zwischen den Messeelektroden angeordnet ist, aufweisen. Mit dieser Information kann der Trocknungsvorgang zeitlich optimiert werden, um die Trocknung des Betriebsmittels frühestens dann zu beenden, wenn die außen liegenden Komponenten dieselbe Feuchte wie die restliche Isolierung aufweisen. Dadurch ist vorteilhafterweise sichergestellt, dass der Trocknungsvorgang erst dann beendet wird, wenn auch die außen liegenden Komponenten die gewünschte Endfeuchte aufweisen. Das erfindungsgemäße Vorgehen verhindert, dass nach einem Trocknungsvorgang Feuchtigkeit aus den außen liegenden Komponenten in die restliche Isolierung diffundiert, wodurch deren Feuchtigkeit ansteigt und unter anderem deren Alterung beschleunigt wird.

Im Rahmen der vorliegenden Erfindung wird auch eine Vorrichtung zur Bestimmung des Feuchtegehalts einer Isolierung eines elektrischen Betriebsmittels bereitgestellt. Dabei umfasst die Vorrichtung Messmittel und Verarbeitungsmittel. Die Messmittel sind ausgestaltet, um eine dielektrische Antwort der Isolierung des Betriebsmittels zu messen. Die Verarbeitungsmittel sind ausgestaltet, um zum einen abhängig von der dielektrischen Antwort den Feuchtegehalt der Isolierung und eine Information, welche den Einfluss der Geometrie der Isolierung auf die dielektrische Antwort anzeigt, zu bestimmen. Darüber hinaus sind die Verarbeitungsmittel ausgestaltet, um abhängig von dem Feuchtegehalt der Isolierung und der den Einfluss der Geometrie anzeigenden Information den Feuchtegehalt der Komponente der Isolierung zu bestimmen.

Im Rahmen der vorliegenden Erfindung wird auch eine weitere Vorrichtung zur Bestimmung des Feuchtegehalts einer Komponente einer Isolierung eines elektrischen Betriebsmittels bereitgestellt. Dabei umfasst die weitere Vorrichtung neben Messmitteln und Verarbeitungsmitteln eine Gegenelektrode, bei welcher es sich nicht um eine Elektrode des Betriebsmittels, sondern beispielsweise um einen Trocknungsraum oder um den Kern eines Transformators oder Wandlers handelt. Die weitere Vorrichtung ist derart ausgestaltet, dass die Komponente zwischen einer Elektrode des Betriebsmittels und der Gegenelektrode angeordnet werden kann. Die Messmittel sind in der Lage, eine dielektrische Antwort der Isolierung zu erfassen. Die Verarbeitungsmittel sind ausgestaltet, um den Feuchtegehalt der Komponente abhängig von der dielektrischen Antwort zu bestimmen.

Die Vorteile der erfindungsgemäßen Vorrichtung und der weiteren erfindungsgemäßen Vorrichtung umfassen im Wesentlichen die Vorteile der erfindungsgemäßen Verfahren, welche vorab im Detail ausgeführt sind, so dass hier auf eine Wiederholung verzichtet wird.

Im Rahmen der vorliegenden Erfindung wird auch eine Trocknungsvorrichtung bereitgestellt, um eine Isolierung eines elektrischen Betriebsmittels zu trocknen. Dabei umfasst die erfindungsgemäße Trocknungsvorrichtung die vorab beschriebene Vorrichtung oder die vorab beschriebene weitere Vorrichtung zur Bestimmung des Feuchtegehalts.

Die erfindungsgemäße Trocknungsvorrichtung umfasst die Vorteile des erfindungsgemäßen Verfahrens zum Trocknen einer Isolierung, welche vorab im Detail ausgeführt sind, so dass hier auf eine Wiederholung verzichtet wird.

Mit der vorliegenden Erfindung kann insbesondere der Feuchtegehalt von Komponenten der Isolierung eines elektrischen Betriebsmittels genau bestimmt werden, so dass insbesondere auch der Feuchtegehalt von außen liegenden Komponenten der Isolierung bestimmt werden kann. Dadurch ist es vorteilhafterweise möglich, eine Trocknung der Isolierung optimal kurz zu gestalten, um exakt einen Soll-Feuchtegehalt zu erzielen. Die Erfindung eignet sich für alle Prozesse, in denen Papier-isolierte oder Öl-Papier-isolierte Produkte getrocknet werden. Darüber hinaus kann beispielsweise das erfindungsgemäße Trocknungsverfahren automatisiert werden, da die vorliegende Erfindung aufgrund der kontinuierlichen Bestimmung des Feuchtegehalts keine Schalthandlung (zum Beispiel für eine Taupunktmessung) benötigt. Auch eine Unterbrechung des Trocknungsverfahrens zur Bestimmung einer Restfeuchte ist nicht notwendig.

Mit der vorliegenden Erfindung kann der Wassergehalt sowohl in neuen, nicht Öl-imprägnierten Isolierungen, als auch in Öl-imprägnierten Isolierungen bestimmt werden. Dadurch kann insbesondere ein Trocknungsprozess während der Herstellung sowie nach der Reparatur oder Instandhaltung eines Betriebsmittels zeitlich optimiert werden.

Durch die vorliegende Erfindung können auch angrenzende oder außen liegende Teile der Isolierung, z. B. der Presskonstruktion bei einem Transformator, bei der Bestimmung der Feuchte genau berücksichtigt werden, was nach dem Stand der Technik nicht möglich ist. Da es sich bei diesen angrenzenden bzw. außen liegenden Isolierungen häufig um massive Isolierungselemente handelt, welche die längste Zeit für eine Trocknung benötigen, ist die erfindungsgemäße Berücksichtigung dieser Isolierungselemente ein entscheidender Vorteil insbesondere für die Bestimmung der benötigten Trockenzeit.

Die vorliegende Erfindung eignet sich insbesondere für Prozesse, in denen Papier-isolierte oder Öl-Papier-isolierte Betriebsmittel bzw. Produkte getrocknet werden, welche sich nicht in Betrieb befinden. Dies umfasst beispielsweise die Herstellung und Reparatur von Transformatoren, Spulen, Wandlern, Kondensatoren und Durchführungen sowohl vor Ort als auch in stationären Anlagen (Öfen). Die Trocknungsverfahren, bei denen die vorliegende Erfindung zum Einsatz kommen kann, sind nach dem Stand der Technik als "Hot-Air"-, "Vapor-Phase"-, "Hot-Oil-Spray"- und "Low Frequency Heating"-Prozesse bekannt.

Im Folgenden wird die vorliegende Erfindung im Detail anhand bevorzugter Ausführungsformen mit Bezug zu den beiliegenden Figuren beschrieben.

In Figuren 1a bis 1d ist eine Phase eines Leistungstransformators mit zwei Wicklungen im Querschnitt dargestellt.

In Figuren 2a und 2b ist der Leistungstransformator im Querschnitt mit einem Pressring dargestellt.

Fig. 3 zeigt schematisch Kapazitäten von den Wicklungen eines Transformators zu einer leitfähigen Umhausung, z.B. einem Ofenraum.

Fig. 4 zeigt den Einfluss der Geometrie auf die dielektrische Antwort.

Fig. 5 zeigt schematisch eine Trocknungsvorrichtung mit einer Vorrichtung zur Bestimmung des Feuchtegehalts.

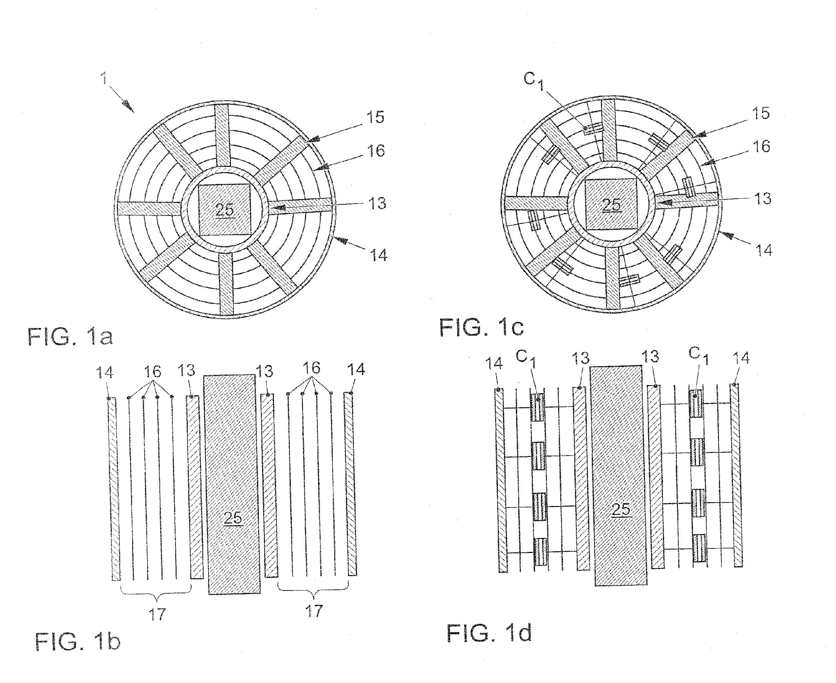

In Fig. 1a ist eine Phase eines Leistungstransformators mit zwei Wicklungen im Querschnitt dargestellt. Innen liegt eine Niedervoltwicklung 13 des Transformators, welche von einer außen liegenden Hochvoltwicklung 14 des Transformators umgeben wird. Zwischen der Niedervoltwicklung 13 und der Hochvoltwicklung 14 sind Spacer 15 und Barrier 16 angeordnet. In den Zwischenräumen ist eine Papierisolation 17 angeordnet. Im Zentrum der Niedervoltwicklung 13 befindet sich ein Eisenkern 25.

In Fig. 1b ist derselbe Transformator im Querschnitt senkrecht zu dem Querschnitt der Fig. 1a dargestellt.

Die Fig. 1c bzw. 1 d entspricht der Fig. 1 a bzw. 1 b, wobei in die Fig. 1c bzw. 1 d zusätzlich Kondensatoren C1 zwischen die Niedervoltwicklung 13 und die Hochvoltwicklung 14 modellartig eingezeichnet sind. Diese Kondensatoren C1 verdeutlichen, dass sich Kapazitäten zwischen der Niedervoltwicklung 13 und der Hochvoltwicklung 14 ausbilden.

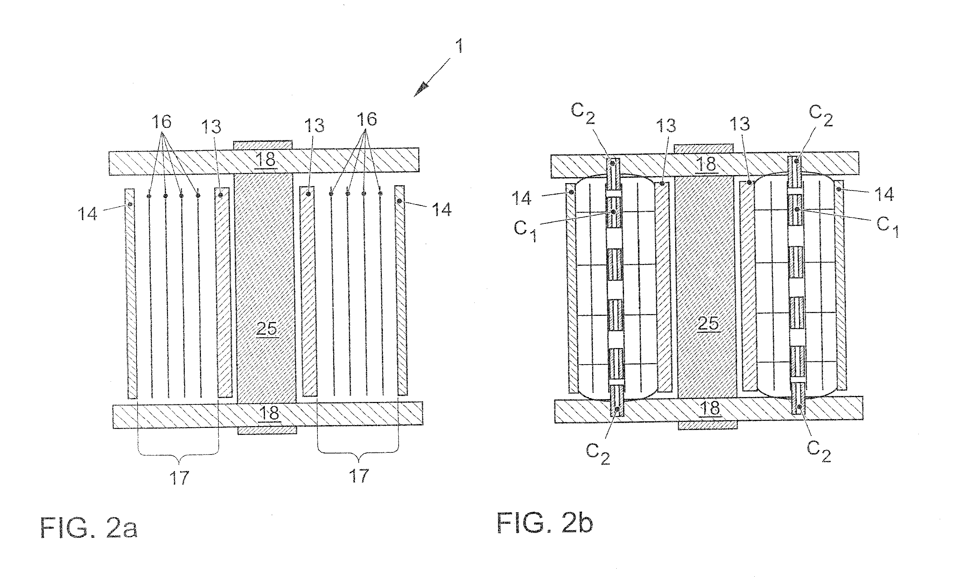

Auch die Fig. 2a zeigt einen Leistungstransformator im Querschnitt. Dabei ist im Vergleich zu Fig. 1b ein Pressring 18 dargestellt, welcher die Niedervoltwicklung 13 und die Hochvoltwicklung 14 nach oben und unten begrenzt und zur Fixierung der Papierisolierung 17 dient.

In Fig. 2b ist derselbe Querschnitt wie in Fig. 2a dargestellt, wobei diesmal zusätzlich als Modell Kondensatoren C1, C2 abgebildet sind. Die mit C2 bezeichneten Kondensatoren modellieren dabei eine Kapazität, welche durch das Pressboard 18 beeinflusst wird.

Die vorliegende Erfindung berücksichtigt insbesondere im ungefüllten Zustand, d.h. ohne Ölfüllung, nicht nur diejenigen Teile der Isolierung, welche sich direkt zwischen den Elektroden zur dielektrischen Messung befinden, sondern auch außen liegende Isolierungen, wie z.B. das Pressboard 18. Dadurch kann erfindungsgemäß auch die Feuchte einer außen liegenden Isolierung berücksichtigt werden. Indem beispielsweise bei dem in Figuren 1 und 2 dargestellten Transformator quasi als Elektroden die Niedervoltwicklung 13 und die Hochvoltwicklung 14 verwendet werden, werden auch die dielektrischen Eigenschaften der Presskonstruktion 18 gemessen, so dass die Feuchte der Presskonstruktion 18 auch zur Bestimmung des Feuchtegehalts beiträgt.

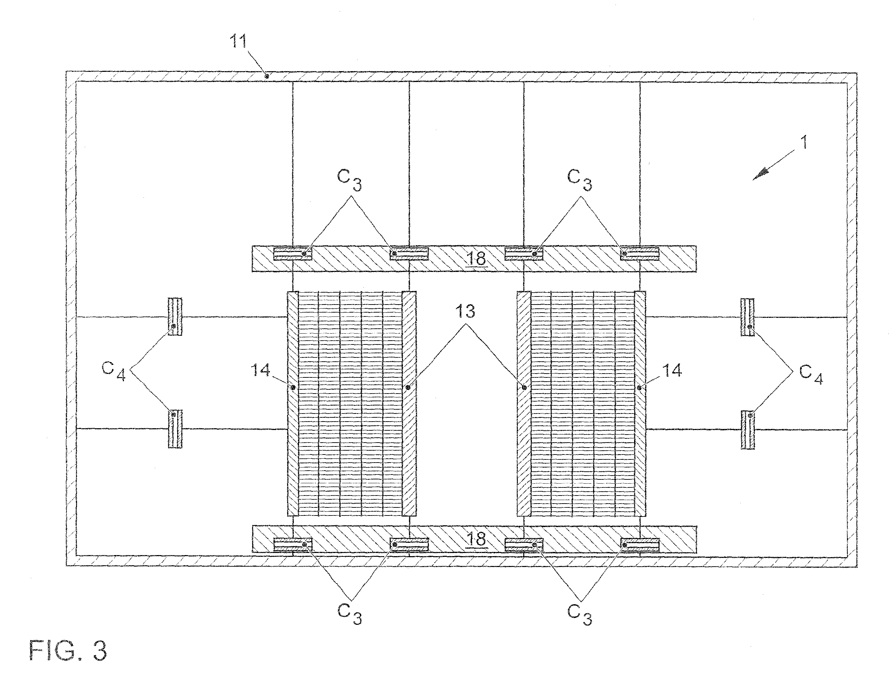

In Fig. 3 ist modellartig ein Leistungstransformator 1 in einem Trocknungsraum bzw. Ofen 11 dargestellt. Dabei modellieren die Kondensatoren C3 eine von den außen liegenden Komponenten der Isolierung (hier dem Pressboard 18) beeinflusste Kapazität zwischen der Niedervoltwicklung 13 oder der Hochvoltwicklung 14 und einer Wand des Ofens 11. In ähnlicher Weise modellieren die Kondensatoren C4 eine Kapazität, welche zwischen der Hochvoltwicklung 14 und der Ofenwand ausgebildet wird, und nahezu nicht von den außen liegenden Komponenten 18 der Isolierung beeinflusst wird.

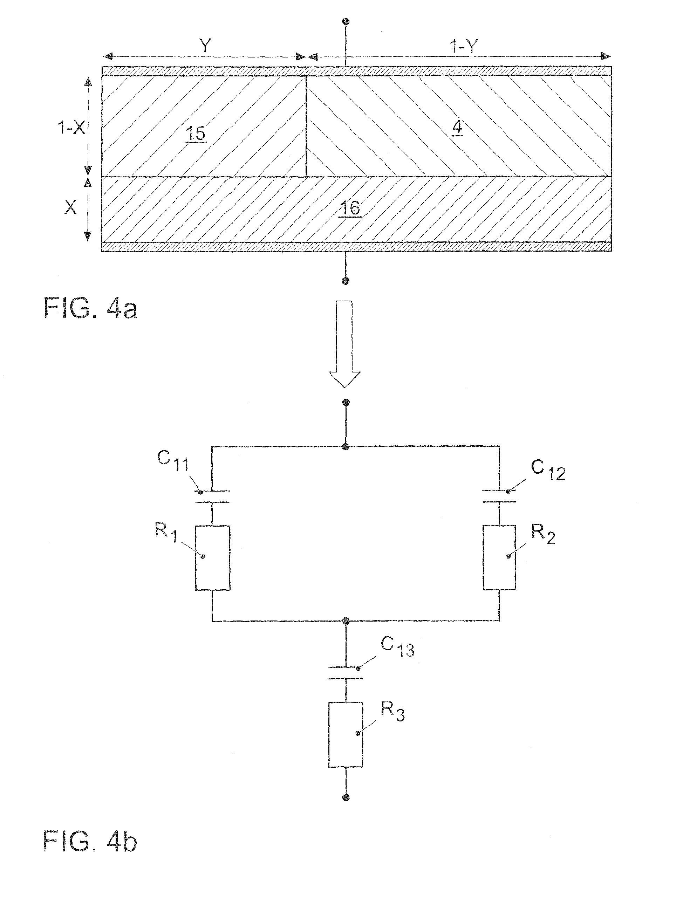

In Fig. 4b ist ein Ersatzschaltbild der in Fig. 4a dargestellten Geometrie dargestellt, mit welchem die geometrischen Eigenschaften der Isolierung bezüglich ihrer dielektrischen Eigenschaften modelliert werden. Während der elektrische Widerstand R1 und der Kondensator C11 im Modell den Spacer (Abstandshalter) 15, der meist aus Papier besteht, repräsentieren, repräsentieren der Widerstand R2 und der Kondensator C12 das Öl 4 und der Widerstand R3 und der Kondensator C13 den Barrier (die Barriere) 16, der ebenfalls meist aus Papier besteht. Die dielektrischen Eigenschaften hängen dabei von den Geometrieparametern X, Y ab, so dass diese Geometrieparameter X, Y auch die Werte der Widerstände R1-R3 und Kondensatoren C11-C13 im Modell beeinflussen. Für jeden Wert der Geometrieparameter X, Y können somit die Werte der Widerstände R1-R3 und Kondensatoren C11-C13 und dadurch die dielektrische Antwort für einen Feuchtewert (eine Feuchte der Isolierung) rechnerisch ermittelt werden. Durch eine Variation der beiden Geometrieparameter X, Y und den Vergleich der damit berechneten dielektrischen Antwort mit der von dem jeweiligen Leistungstransformator 1 gemessenen dielektrischen Antwort können die am besten passenden Geometrieparameter X, Y für den jeweils gemessenen Transformator 1 ermittelt werden.

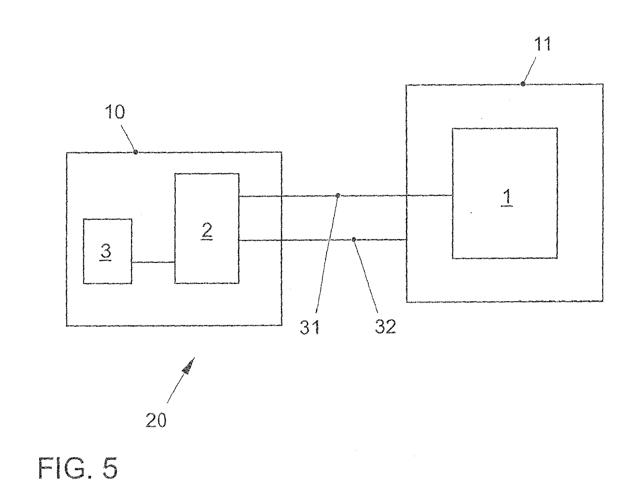

Fig. 5 stellt schematisch eine erfindungsgemäße Trocknungsvorrichtung 20 dar. Die erfindungsgemäße Trocknungsvorrichtung 20 umfasst eine erfindungsgemäße Vorrichtung 10 zur Bestimmung des Feuchtegehalts einer Isolierung und einen Ofen 11. In diesem Ofen 11 befindet sich ein Leistungstransformator 1, damit die Isolation des Leistungstransformators 1 getrocknet wird. Die Vorrichtung 10 umfasst eine Messvorrichtung 2 zur Messung einer dielektrischen Antwort und Verarbeitungsmittel 3. Die Vorrichtung 10 ist in der Lage, die dielektrische Antwort der Isolierung des Transformators 1 zu messen, obwohl sich der Transformator 1 zum Trocknen in dem Ofen 11 befindet.

Damit kann erfindungsgemäß der Feuchtegehalt der Isolierung des Transformators 1 ständig überwacht werden, ohne den Trocknungsvorgang des Transformators 1 unterbrechen zu müssen, wie es nach dem Stand der Technik z.B. bei der Taupunktmessung der Fall ist. Darüber hinaus ist es möglich, durch die ständige Bestimmung des Feuchtegehalts den Trocknungsvorgang in dem Ofen 11 derart zu steuern, dass ein vorbestimmter Soll-Feuchtegehalt genau erreicht wird, ohne dass die Isolierung durch ein zu langes Trocknen geschädigt wird.

### BEZUGSZEICHENLISTE

- 1: Trafo
- 2: Messvorrichtung zur Messung einer dielektrischen Antwort
- 3: Verarbeitungsmittel
- 4: Öl
- 10: Vorrichtung
- 11: Ofen
- 13: Niedervoltwicklung
- 14: Hochvoltwicklung
- 15: Spacer
- 16: Barrier
- 17: Isolation
- 18: Pressboard
- 20: Trocknungsvorrichtung
- 25: Eisenkern
- 31,32: Elektrode
- C₁-C₄: Kapazität
- C₁₁-C₁₃: Kapazität
- R₁-R₃: Widerstand
- X,Y: Abmessung

## Patentansprüche

1. Verfahren zur Bestimmung des Feuchtegehalts einer Komponente (18) einer Isolierung (17, 18) eines elektrischen Betriebsmittels (1), wobei das Verfahren umfasst:
- Messen einer dielektrischen Antwort der Isolierung (17, 18) mittels einer Elektrode (13; 14) des Betriebsmittels (1) und einer Gegenelektrode (11), wobei die Komponente (18) zwischen der Elektrode (13; 14) und der Gegenelektrode (11) angeordnet ist, und
- Bestimmen des Feuchtegehalts der Komponente (18) abhängig von der dielektrischen Antwort,
**dadurch gekennzeichnet,**
**dass** die Gegenelektrode durch einen Trocknungsraum (11) gebildet ist, in welchem das Betriebsmittel (1) getrocknet wird.

2. Verfahren nach Anspruch 1,
**dadurch gekennzeichnet,**
**dass** das Betriebsmittel ein Transformator (1), eine Spule, ein Wandler, ein Kondensator oder eine Durchführung ist.

3. Verfahren nach einem der vorhergehenden Ansprüche,
**dadurch gekennzeichnet,**
**dass** die Isolierung eine Papierisolierung umfasst.

4. Verfahren zum Trocknen einer Isolierung (17, 18) eines elektrischen Betriebsmittels (1),
wobei ein Feuchtegehalt der Komponente (18) der Isolierung (17, 18) mit einem Verfahren nach einem der Ansprüche 1-3 bestimmt wird, und
wobei das Trocknen der Isolierung (17, 18) abhängig von dem bestimmten Feuchtegehalt erfolgt.

5. Verfahren nach Anspruch 4,
**dadurch gekennzeichnet,**
**dass** das Bestimmen des Feuchtegehalts während des Trocknens und ohne eine Unterbrechung des Trocknens wiederholt wird.

6. Vorrichtung zur Bestimmung des Feuchtegehalts einer Komponente (18) einer Isolierung (17, 18) eines elektrischen Betriebsmittels (1),
wobei die Vorrichtung (10) eine Gegenelektrode (11), Messmittel (2) und Verarbeitungsmittel (3) umfasst,
wobei die Messmittel (2) zum Messen einer dielektrischen Antwort der Isolierung (17, 18) mittels einer Elektrode (13; 14) des Betriebsmittels (1) und der Gegenelektrode (11) ausgestaltet sind, wobei die Komponente (18) zwischen der Elektrode (13; 14) und der Gegenelektrode (11) anzuordnen ist; und
wobei die Verarbeitungsmittel (3) zum Bestimmen eines Feuchtegehalts der Komponente (18) abhängig von der dielektrischen Antwort ausgestaltet sind, **dadurch gekennzeichnet,**
**dass** die Gegenelektrode durch einen Trocknungsraum (11), welcher zum Trocknen des Betriebsmittels (1) vorgesehen ist, gebildet ist.

7. Vorrichtung nach Anspruch 6,
**dadurch gekennzeichnet,**
**dass** die Vorrichtung (10) zur Durchführung des Verfahrens nach einem der Ansprüche 1-5 ausgestaltet ist.

8. Trocknungsvorrichtung zum Trocknen einer Isolierung (17, 18) eines elektrischen Betriebsmittels (1), welche eine Vorrichtung (10) nach einem der Ansprüche 6 bis 7 umfasst.
